# EUROPÄISCHE PATENTSCHRIFT

(11) **EP 1 142 090 B1**
(45) Veröffentlichungstag und Bekanntmachung des Hinweises auf die Patenterteilung: **04.02.2004**
(21) Anmeldenummer: 99953420.9
(22) Anmeldetag: 04.11.1999
(51) Int. Cl.: H02M 3/28, H02M 1/10

(54) **SPANNUNGSUMSCHALTVORRICHTUNG**
VOLTAGE SWITCH-OVER DEVICE
DISPOSITIF COMMUTATEUR DE TENSION

(30) Priorität: 12.11.1998 AT 189198
(43) Veröffentlichungstag der Anmeldung: 10.10.2001
(73) Patentinhaber: Fronius International GmbH, 4643 Pettenbach (AT)
(72) Erfinder: AIGNER, Hubert, A-4715 Taufkirchen/Trattnach (AT); HIESMAYR, Alfred, A-4642 Sattledt (AT); OBERZAUCHER, Friedrich, A-4600 Wels (AT); PAMMER, Walter, A-4540 Bad Hall (AT)
(74) Vertreter: Secklehner, Günter, Dr.
(86) Internationale Anmeldenummer: PCT/AT1999/000263
(87) Internationale Veröffentlichungsnummer: WO 2000/030241

(56) Entgegenhaltungen:
- DE-A- 4 430 394
- US-A- 3 846 695
- US-A- 5 272 313
- US-A- 5 771 163

## Beschreibung

Die Erfindung betrifft eine Spannungsumschaltvorrichtung, wie sie im Oberbegriff des Anspruches 1 beschrieben ist.

Aus der US 5,272,313 A ist ein Lichtbogen- Schweißgerät bekannt, welches entweder als Energieversorungsvorrichtung für 400 Volt, oder aber als Energieversorungsvorrichtung für ungefähr die Hälfte der Spannung, also 200 Volt, verwendet werden kann. Dazu ist im Schweißgerät ein Schaltkreis angeordnet, welcher einen Gleichrichter aufweist der die eingehende Wechselspannung in Gleichspannung umwandelt, die von Kondensatoren geglättet wird. Diese Gleichspannung wird nun von einem Wechselrichter in eine hochfrequente Wechselspannung umgewandelt, wobei über einen ausgehenden Transformator die Spannung herabgesetzt wird und diese anschließend wieder gleichgerichtet wird. Die Eingangsspannung wird nach dem Eingangsgleichrichter automatisch durch eine Schaltvorrichtung über paralleloder in Serie geschaltete Kondensatoren auf die gewünschte Spannung gebracht.

Aus der DE-C2 43 05 768 ist eine Spannungsumschaltvorrichtung bekannt, die mit einer einen positiven und einen negativen Ausgangsanschluß aufweisenden Drehstrombrücke, insbesondere einer Energiequelle und mit zwei Hochsetzstellern, von denen der eine zwischen einem gemeinsamen Leitungsstück und dem positiven Ausgangsanschluß und der zweite zwischen dem gemeinsamen Leitungsstück und dem negativen Ausgangsanschluß derartig geschaltet ist, daß die beiden Ausgangsspannungen der Hochsetzsteller, insbesondere der beiden in den Hochsetzstellern angeordneten Speicherelementen, sich zu der Ausgangsspannung addieren. Die beiden Hochsetzsteller sind derartig ausgebildet, daß die einzelnen Speicherelemente direkt über eine Leitung miteinander verbunden sind. Parallel zu den Speicherelementen sind die Schaltelemente angeordnet, die im Mittelpunkt der seriell zueinander geschalteten Schaltelemente mit dem Mittelpunkt der Speicherelemente zusammengeschaltet sind. Nachteilig ist hierbei, daß durch die direkte Verbindung der beiden Speicherelemente ein kapazitiver Mittelpunkt geschaffen wird.

Weiters ist aus der DE-C1 41 12 907 eine Spannungsumschaltvorrichtung bekannt, die zwei symmetrische Schaltungshälften aufweisende Spannungsverdopplungsschaltungen mit durch einen Eingangsnetzwechselspannungsumschalter gebildeten Umschaltmöglichkeiten für die beiden Betriebsfälle aufweisen und zwei zueinander im wesentlichen spiegelsymmetrisch ausgebildeten Hochsetzstellern, die jeweils in einer der beiden symmetrischen Schaltungshälften der Spannungsverdopplungsschaltung angeordnet sind. Nachteilig ist hier wiederum, daß die beiden Speicherelemente der Hochsetzsteller direkt miteinander verbunden sind und somit wiederum ein kapazitiver Mittelpunkt gebildet wird.

Es sind bereits Spannungsumschaltvorrichtungen bekannt, die für die Ansteuerung von Leistungsschaltnetzteilen verwendet werden. Hierzu ist die Spannungsumschaltvorrichtung derart ausgerichtet, daß für jede mögliche Spannungshöhe, insbesondere für 230 V und 400 V Spannungsnetze, eine eigene Schaltgruppe angeordnet ist, wobei bei entsprechender Auswertung der gelieferten Spannungshöhe auf die entsprechende Schaltgruppe über eine Schaltvorrichtung umgeschaltet wird. Die einzelnen Schaltgruppen bestehen beispielsweise aus einem Netzgleichrichter sowie einem Speicherelement.

Die einzelnen für die unterschiedlichen Spannungshöhen angeordneten Schaltgruppen werden dazu zueinander parallel geschaltet, wobei über eine entsprechende Schaltvorrichtung eine entsprechende Schaltgruppe aktiviert wird. Nachteil ist hierbei, daß die einzelnen Schaltgruppen unabhängig voneinander dimensioniert werden müssen, sodaß durch die Verwendung von unterschiedlichen Bauelementen die Kosten einer derartigen Spannungsumschaltvorrichtung relativ hoch sind.

Der vorliegenden Erfindung liegt die Aufgabe zugrunde, eine Spannungsumschaltvorrichtung zu schaffen, bei der in einfacher Form eine Umschaltung von einer Energiequelle mit einer entsprechenden Spannungshöhe auf eine weitere Energiequelle mit einer anderen Spannungshöhe ermöglicht wird.

Diese Aufgabe der Erfindung wird durch die Merkmale des Kennzeichenteils des Anspruches 1 gelöst. Vorteilhaft ist hierbei, daß durch die Anordnung der Hochsetzsteller der Energiefluß zu den Speicherelementen über die Regelung der Hochsetzsteller symmetriert werden kann, wodurch ein unsymmetrisches Versorgen des nachgeschalteten Hochfrequenzinverters in einfacher Form verhindert wird. Ein weiterer Vorteil liegt darin, daß durch die Verwendung der Hochsetzsteller in der Spannungsumschaltvorrichtung ein kapazitiver Spannungsmittelpunkt, welcher durch eine Parallel- oder Serienschaltung der Speicherelemente zustande kommt, nicht erforderlich ist.

Weitere vorteilhafte Ausbildungen sind in den Ansprüchen 2 bis 20 beschrieben. Die damit erzielbaren Vorteile sind der detaillierten Figurenbeschreibung zu entnehmen.

Die Erfindung wird im nachfolgenden anhand der in den Zeichnungen dargestellten Ausführungsbeispiele näher erläutert.

Es zeigen:
- Fig. 1: einen schematischen Aufbau eines Schweißgerätes in vereinfachter Darstellung;
- Fig. 2: ein Blockschaltbild einer erfindungsgemäßen Spannungsumschaltvorrichtung in vereinfachter Darstellung.

Einführend sei festgehalten, daß in den Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

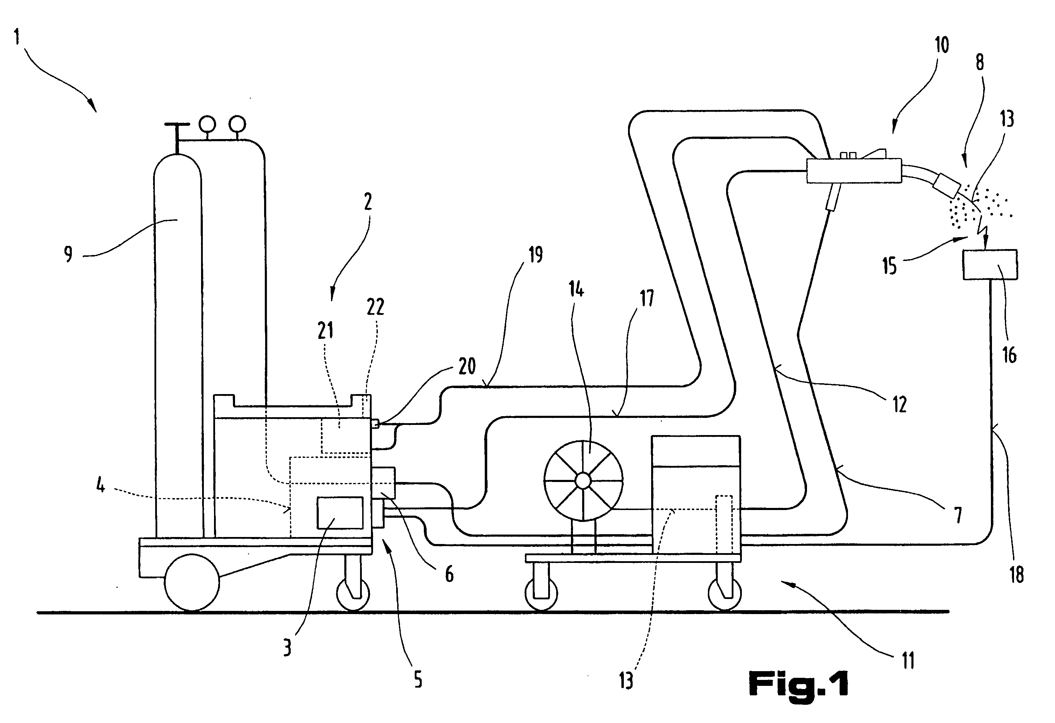

In Fig. 1 ist ein Schweißgerät 1 für verschiedenste Schweißverfahren, wie z.B. MIG/MAG-Schweißen bzw. TIG-Schweißen oder Elektroden-Schweißverfahren, gezeigt.

Das Schweißgerät 1 umfaßt eine Stromquelle 2 mit einem Leistungsteil 3, eine Steuervorrichtung 4 und ein dem Leistungsteil 3 bzw. der Steuervorrichtung 4 zugeordnetes Umschaltglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas, wie beispielsweise CO₂, Helium oder Argon und dgl., zwischen einem Gasspeicher 9 und einem Schweißbrenner 10 angeordnet ist.

Zudem kann über die Steuervorrichtung 4 noch ein Drahtvorschubgerät 11, welches für das MIG/MAG-Schweißen üblich ist, angesteuert werden, wobei über eine Versorgungsleitung 12 ein Schweißdraht 13 von einer Vorratstrommel 14 in den Bereich des Schweißbrenners 10 zugeführt wird. Der Strom zum Aufbauen eines Lichtbogens 15 zwischen dem Schweißdraht 13 und einem Werkstück 16 wird über eine Versorgungsleitung 17 vom Leistungsteil 3 der Stromquelle 2 dem Schweißbrenner 10 bzw. dem Schweißdraht 13 zugeführt, wobei das zu verschweißende Werkstück 16 über eine weitere Versorgungsleitung 18 ebenfalls mit dem Schweißgerät 1 verbunden ist und somit über den Lichtbogen 15 ein Stromkreis aufgebaut werden kann.

Zum Kühlen des Schweißbrenners 10 kann über einen Kühlkreislauf 19 der Schweißbrenner 10 unter Zwischenschaltung eines Strömungswächters 20 mit einem Wasserbehälter 21 verbunden werden, wodurch bei der Inbetriebnahme des Schweißbrenners 10 der Kühlkreislauf 19 von der Steuervorrichtung 4 gestartet werden kann und somit eine Kühlung des Schweißbrenners 10 bzw. des Schweißdrahtes 13 bewirkt wird.

Weiters weist das Schweißgerät 1 eine Ein- und/oder Ausgabevorrichtung 22 auf, über die die unterschiedlichsten Schweißparameter bzw. Betriebsarten des Schweißgerätes 1 eingestellt werden können. Dabei werden die über die Ein- und/oder Ausgabevorrichtung 22 eingestellten Schweißparameter an die Steuervorrichtung 4 weitergeleitet und von dieser werden anschließend die einzelnen Komponenten des Schweißgerätes 1 angesteuert.

Selbstverständlich ist es möglich, daß nicht, wie in dem dargestellten Ausführungsbeispiel der Schweißbrenner 10 über einzelne Leitungen mit den einzelnen Komponenten, insbesondere mit dem Schweißgerät 1 bzw. dem Drahtvorschubgerät 11, verbunden wird, sondern daß diese einzelnen Leitungen in einem gemeinsamen Schlauchpaket zusammengefaßt sind und dieses an dem Schweißbrenner 10 und dem Schweißgerät angeschlossen wird.

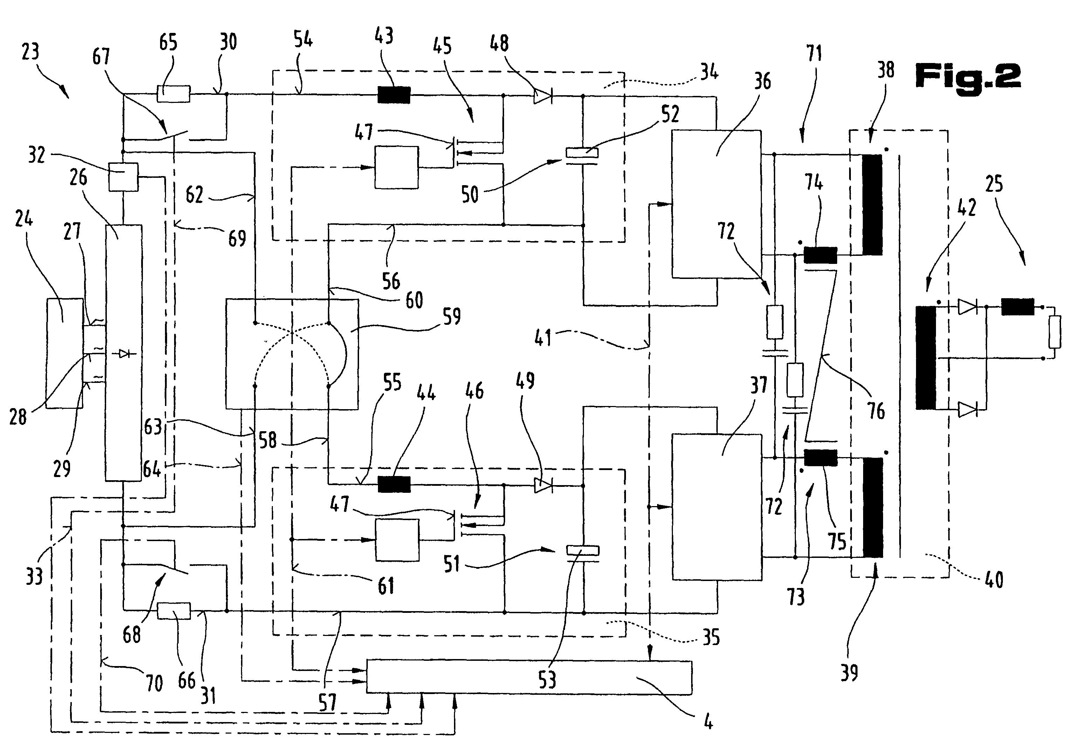

In Fig. 2 ist ein Blockschaltbild einer Spannungsumschaltvorrichtung 23 für das Schweißgerät 1 gezeigt. Die Spannungsumschaltvorrichtung 23 kann selbstverständlich für jedes beliebige elektrische bzw. elektronische Gerät oder Steuerung eingesetzt werden.

Die Spannungsumschaltvorrichtung 23 hat die Aufgabe, die von einer Energiequelle 24 gelieferte Spannung, insbesondere die Höhe der Spannung, zu ermitteln und eine entsprechende konstante Spannung einem Verbraucher 25, wie beispielsweise der Steuervorrichtung 4, dem Leistungsteil 3 usw., zur Verfügung zu stellen. Dabei ist es möglich, daß die Spannungsumschaltvorrichtung 23 an unterschiedliche Energiequellen 24 mit unterschiedlich hohen Spannungen, insbesondere Eingangsspannungen, angeschlossen werden kann kann.

Die Spannungsumschaltvorrichtung 23 weist hierzu einen Netzgleichrichter 26 auf, der über Netzanschlußleitungen 27 bis 29 mit der Energiequelle 24, welche beispielsweise durch ein öffentliches Versorgungsnetz gebildet ist, verbunden ist. Durch den Netzgleichrichter 26 wird nunmehr erreicht, daß die von der Energiequelle 24 gelieferte Energie, insbesondere eine Wechselspannung, in eine gleichgerichtete Energie, insbesondere in eine Gleichspannung, umgewandelt wird, wobei an den Ausgängen des Netzgleichrichters 26 eine positive Versorgungsleitung 30, an der das positive Potential der Gleichspannung anliegt, und eine negative Versorgungsleitung 31, an der das negative Potential der Gleichspannung anliegt, angeschlossen sind.

An einem der beiden Ausgänge des Netzgleichrichters 26, insbesondere in der positiven Versorgungsleitung, ist in Serie zum Netzgleichrichter 26 eine Netzauswertevorrichtung 32 angeordnet. Die Netzauswertevorrichtung 32 hat die Funktion, die vom Netzgleichrichter 26 in die positive/negative Versorgungsleitung 30, 31 gelieferte Energie, insbesondere die Höhe der gelieferten Spannung, zu ermitteln und diese anschließend über eine am Ausgang der Netzauswertevorrichtung 32 angeschlossene Steuerleitung 33 an die Steuervorrichtung 4 des Schweißgerätes 1 weiterzuleiten. Selbstverständlich ist es möglich, daß die Netzauswertevorrichtung 32 dem Netzgleichrichter 26 vorgeschaltet ist, sodaß die Ermittlung der Höhe der Eingangsspannung von der Energiequelle 24 im Wechselspannungskreis zwischen der Energiequelle 24 und dem Netzgleichrichter 26 erfolgen kann.

Weiters weist die Spannungsumschaltvorrichtung 23 zumindest zwei Hochsetzsteller 34, 35 auf, wobei in den positiven und negativen Versorgungsleitungen 30, 31 des Netzgleichrichters 26 jeweils ein Hochsetzsteller 34, 35 angeordnet ist, d.h. daß zumindest ein Eingang bzw. ein Ausgang der Hochsetzsteller 34, 35 mit der positiven oder der negativen Versorgungsleitungen 30, 31 verbunden ist.

Die beiden Hochsetzsteller 34, 35 sind anschließend mit jeweils einem Hochfrequenzinverter (Wechselrichter) 36, 37 zusammengeschaltet, wobei die Hochfrequenzinverter 36, 37 jeweils mit einer Primärwicklung 38, 39 eines Transformators 40 verbunden sind. Die Hochfrequenzinverter 36, 37 können beispielsweise aus einer Vollbrücke, Halbbrücke usw., gebildet werden, wobei beispielsweise bei Verwendung einer Vollbrücke diese aus mehreren Schaltelementen, insbesondere aus Transistoren, wie sie aus dem Stand der Technik bekannt sind, aufgebaut wird. Die Steuerung der einzelnen Schaltelementen bzw. des Hochfrequenzinverters erfolgt derartig, daß die einzelnen Eingänge der Schaltelemente über eine Steuerleitung 41 mit der Steuervorrichtung 4 verbunden sind. Auf die Funktion der einzelnen Hochfrequenzinverter 36, 37 wird nicht näher eingegangen, da jedes beliebige Verfahren zum Steuern beispielsweise einer Vollbrücke, insbesondere der Hochfrequenzinverter 36, 37, eingesetzt werden kann.

Hierzu ist nur zu erwähnen, daß über die Steuerleitung 41 die Steuervorrichtung 4 die einzelnen Schaltelemente paarweise ansteuert, sodaß über die Hochfrequenzinverter 36, 37 eine sogenannte Wechselspannung an die Primärwicklungen 38, 39 angelegt wird. Dies ist insofern notwendig, da die gelieferte Energie vom Netzgleichrichter 26 in eine Gleichspannung umgewandelt wird, sodaß diese Gleichspannung wiederum in eine Wechselspannung, insbesondere in eine Rechteckspannung, umgewandelt wird, sodaß aufgrund der Stromflußänderung, insbesondere durch die Wechselspannung bzw. Rechteckspannung, durch die einzelnen Primärwicklungen 38, 39 eine Energieübertragung auf die Sekundärseite des Transformators 40 ermöglicht wird und somit eine Energieversorgung durch eine an der Sekundärseite angeordnete Sekundärwicklung 42 für den Verbraucher 25 möglich ist. Diese Energieübertragung über den Transformator 40 ist insofern von Vorteil, da dadurch eine galvanische Trennung des Verbrauchers 25 von der Spannungsumschaltvorrichung 23 bzw. der Energiequelle 24 erreicht wird.

Der Verbraucher 25 kann dabei aus jedem beliebigen aus dem Stand der Technik bekannten Verbraucher 25, wie beispielsweise einem Computer, einem Batterieladegerät, einer Solaranlage, einer SPS-Steuerung, einer Stromquelle usw. gebildet werden, wobei schematisch ein Widerstand als Verbraucher 25 dargestellt ist, der beispielsweise über eine Mittelpunktschaltung mit einer Zweiwegegleichrichterschaltung an die Sekundärwicklung 42 angeschlossen ist.

Bei der Ausbildung der eingesetzten Hochsetzsteller 34, 35 in der Spannungsumschaltvorrichtung 23 ist es wiederum möglich, daß jeder beliebige aus dem Stand der Technik bekannte Hochsetzsteller 34, 35 verwendet werden kann. Selbstverständlich ist es auch möglich, daß jedes für die einzelnen Hochsetzsteller 34, 35 bekannte Steuer- bzw. Regelverfahren von der Steuervorrichtung 4 eingesetzt bzw. von dieser durchgeführt werden kann. Bei dem dargestellten Ausführungsbeispiel werden die beiden Hochsetzsteller 34, 35 aus jeweils einer Drossel 43, 44, einem Schaltelement 45, 46, insbesondere aus einem Transistor 47, einer Diode 48, 49 und einem Speicherelement 50, 51, insbesondere einem Kondensator 52, 53, gebildet. Die beiden Hochsetzsteller 34, 35 weisen dabei eine positive Leitung 54, 55 und eine negative Leitung 56, 57 auf, wobei in der positiven Leitung 54, 55 jeweils die Drosseln 43, 44 und die Dioden 48, 49 seriell angeordnet sind. Zwischen den Drosseln 43, 44 und den Dioden 48, 49 ist jeweils das Schaltelement 45, 46 mit jeweils der positiven und negativen Leitung 54, 56 und 55, 57 verbunden, wodurch durch Aktivieren der Schaltelemente 45, 46 die positiven und negativen Leitungen 54 bis 57 miteinander über das Schaltelement 45, 46 verbunden bzw. kurzgeschlossen werden können. Parallel zu den Schaltelementen 45, 46 sind unter Zwischenschaltung der Dioden 48, 49 die Speicherelemente 50, 51 angeordnet, wobei die Speicherelemente 50, 51 wiederum mit den positiven und negativen Leitungen 54 bis 57 verbunden sind.

Ein derartiger Aufbau, wie er zuvor beschrieben ist, zählt zum Stand der Technik und wird daher nicht näher auf die einzelnen Funktionsweisen der einzelnen Bauteile bzw. Bauelemente untereinander eingegangen. Es wird nur grundsätzlich darauf hingewiesen, daß ein derartiger Hochsetzsteller 34, 35 durch Aktivieren der Schaltelemente 45, 46 einen Kurzschluß zwischen den positiven und negativen Leitungen 54 bis 57 bildet, wodurch in den Drosseln 43, 44 Energie gespeichert wird, die anschließend beim Deaktivieren der Schaltelemente 45, 46 über die Dioden 48, 49 an das Speicherelement 50, 51 bzw. über den Transformator 40 an den Verbraucher 25 abgegeben wird.

Die beiden Hochsetzsteller 34, 35 werden in der Spannungsumschaltvorrichtung 23 derartig angeordnet, daß die Drossel 43 des Hochsetzstellers 34 mit der positiven Versorgungsleitung 30 verbunden ist, wogegen die Drossel 44 des weiteren Hochsetzstellers 35 über eine Verbindungsleitung 58 mit einem Eingang einer Schaltvorrichtung 59 verbunden ist. Die negative Leitung 56 des ersten Hochsetzstellers 34 ist wiederum über eine Verbindungsleitung 60 mit der Schaltvorrichtung 59 verbunden, wogegen die negative Leitung 57 des weiteren Hochsetzstellers 35 mit der negativen Versorgungsleitung 31 des Netzgleichrichters 26 verbunden ist. Damit die einzelnen Hochsetzsteller 34, 35 von der Steuervorrichtung 4 angesteuert werden können, sind die Schaltelemente 45, 46, insbesondere deren Eingänge, über eine Steuerleitung 61 mit der Steuervorrichtung 4 verbunden. Dazu ist es beispielsweise möglich, daß vor den Schaltelementen 45, 46 eine entsprechend zum Stand der Technik zählende Ansteuervorrichtung für Schaltelemente 45, 46 angeordnet sein kann, die das gelieferte Signal in ein entsprechendes Signal für das Schaltelement 45, 46 umwandelt.

Dabei ist es möglich, daß die beiden Eingänge der Schaltelemente 45, 46 bzw. der Ansteuervorrichtung untereinander verbunden werden können, wobei anschließend diese Eingänge über die Steuerleitung 61 mit der Steuervorrichtung 4 verbunden werden. Durch diese Zusammenschaltung der beiden Schaltelemente 45, 46 wird erreicht, daß ein Parallellauf der beiden Hochsetzsteller 34, 35 sichergestellt ist. Selbstverständlich ist es möglich, daß die einzelnen Schaltelemente 45, 46 über jeweils eine eigene Steuerleitung 61 mit der Steuervorrichtung 4 verbunden werden können, wodurch die einzelnen Hochsetzsteller 34, 35 unabhängig voneinander angesteuert bzw. geregelt werden können.

Die mit den Hochsetzstellern 34, 35 verbundene Schaltvorrichtung 59 ist parallel zum Netzgleichrichter 26 angeordnet, d.h. daß über weitere Eingänge der Schaltvorrichtung 59 diese über weitere Verbindungsleitungen 62, 63 mit den positiven und negativen Versorgungsleitungen 30, 31 des Netzgleichrichters 26 verbunden sind, d.h. daß nunmehr die Schaltvorrichtung 59 parallel zum Netzgleichrichter 26 in der Spannungsumschaltvorrichtung 23 angeordnet ist und gleichzeitig über die Verbindungsleitungen 58 und 60 mit den Hochsetzstellern 34, 35 zusammengeschaltet ist.

Damit eine Steuerung der Schaltvorrichtung 59 von der Steuervorrichtung 4 durchgeführt werden kann, ist eine Steuereingang der Schaltvorrichtung 59 über eine Steuerleitung 64 mit der Steuervorrichtung 4 verbunden. Die Steuervorrichtung 4 hat dabei die Möglichkeit, daß durch Aussenden eines Steuersignals über die Steuerleitung 64 verschiedenste Schaltzustände der Schaltvorrichtung 59 hervorgerufen werden können. Dieses Schaltzustände sind in der Schaltvorrichtung 59 durch strichlierte Linien und durch volle Linien dargestellt. Hierbei ist es möglich, daß die Schaltvorrichtung 59 durch ein Relais oder durch elektronische Bauelemente wie Transistoren u.s.w. aufgebaut werden kann, wobei jedoch sichergestellt werden muß, daß die unterschiedlichen Schaltzustände hergestellt werden können. Weiters ist es möglich, daß anstelle der Steuerung bzw. Regelung der Schaltvorrichtung 59 von der Steuervorrichtung 4 direkt über die Netzauswertevorrichtung 32 durchgeführt wird, d.h. daß die Netzauswertevorrichtung 32 mit den Steuereingang der Schaltvorrichtung 59 verbunden wird, sodaß aufgrund eines Steuersignals von der Netzauswertevorrichtung 32 ein entsprechender Zustand in der Schaltvorrichtung 59 hergestellt wird. Auf die einzelnen Zustände der Schaltvorrichtung 59 wird anschließend bei der Funktionsbeschreibung der Spannungsumschaltvorrichtung 23 noch näher eingegangen.

Durch die Anordnung der beiden Hochsetzsteller 34, 35 in der Spannungsumschaltvorrichtung 23 ist es nunmehr erforderlich, daß für die erstmalige Inbetriebnahme Ladewiderstände 65, 66 zugeschaltet werden müssen. Diese Ladewiderstände 65, 66 werden seriell in die positive und negative Versorgungsleitung 30, 31 vom Netzgleichrichter 26 zu den Hochsetzstellern 34, 35 angeordnet. Die Anordnung bzw. das Zwischenschalten der Ladewiderstände 65, 66 beim erstmaligen Aktivieren der Spannungsumschaltvorrichtung 23 ist deshalb erforderlich, da die beiden Speicherelemente 50, 51 einen Kurzschluß zwischen den positiven und negativen Leitungen 54 bis 57 erzeugen, der jedoch durch die Ladewiderstände 65, 66 vermieden wird, d,h. daß durch Aktivieren der Spannungsumschaltvorrichtung 23, also durch Anlegen einer Betriebsspannung, die Speicherelemente 50, 51, die den Zwischenkreiskondensator bilden, einen Kurzschluß zwischen den beiden Leitungen 54, 56 und 55, 57 bilden, wodurch eine erhebliche Stromaufnahme von der Energiequelle 24 entstehen würde.

Damit jedoch die restlichen Bauelemente nicht auf eine derartig hohe Stromaufnahme dimensioniert werden müssen, werden nunmehr in die positiven und negativen Versorgungsleitungen 30, 31 die Ladewiderstände 65, 66 angeordnet. Ein weiterer Vorteil der Anordnung der Ladewiderstände 65, 66 liegt darin, daß somit eine konstante Stromaufnahme von der Energiequelle 24 erzielt wird und somit ein schonenderer Ladungszyklus für die einzelnen Speicherelemente 50, 51 durchgeführt werden kann.

Damit jedoch die Ladewiderstände 65, 66 aus dem Stromkreis der positiven und negativen Versorgungsleitung 30, 31 geschaltet werden können, ist parallel zu den Ladewiderständen 65, 66 jeweils ein Überbrückungsschaltelement 67, 68 angeordnet. Das Überbrückungsschaltelement 67, 68 hat die Aufgabe, nach Ablauf einer voreinstellbaren Zeitdauer bzw. nach Erreichen einer entsprechenden Ladung der Speicherelemente 50, 51 die Ladewiderstände 65, 66 durch Kurzschluß der Ladewiderstände 65, 66 diese aus dem Stromkreis zu schalten. Hierzu sind die Überbrückungsschaltelemente 67, 68 über Steuerleitungen 69, 70 mit der Steuervorrichtung 4 verbunden. Die Überbrückungsschaltelemente 67, 68 können beispielsweise aus einem elektronisch gesteuerten Schließer oder Öffner, einem Relais, oder anderen Schaltelementen, wie beispielsweise einem Transistor, gebildet werden.

Das Zuschalten und Wegschalten der Ladewiderstände 65, 66 kann derartig erfolgen, daß bei der Inbetriebnahme der Spannungsumschaltvorrichtung 23, also beim Anlegen einer Betriebsspannung, durch die Verwendung eines elektronisch gesteuerten Schließers die Ladewiderstände 65, 66 bereits in den Stromkreis eingeschaltet sind. Die von der Energiequelle 24 gelieferte Energie wird vom Netzgleichrichter 26 in eine Gleichspannung umgewandelt, die anschließend an die positive und negative Versorgungsleitung 30, 31 angelegt wird und somit durch die Ladewiderstände 65, 66 an die Hochsetzsteller 34, 35 geliefert wird. Wird jedoch in der Spannungsumschaltvorrichtung 23 als Überbrückungsschaltelement 67, 68 ein Öffner eingesetzt, so muß bei der Inbetriebnahme die Steuervorrichtung 4 über die Steuerleitungen 69, 70 ein Signal ausgesendet werden, sodaß die Überbrückungsschaltelemente 67, 68 geöffnet werden und somit der Kurzschluß über die Ladewiderstände 65, 66 aufgehoben wird.

Gleichzeitig mit dem Aktivieren der Spannungsumschaltvorrichtung 23 startet die Steuervorrichtung 4 beispielsweise eine Zeitfunktion, d.h. daß nach Ablauf dieser voreinstellbaren Zeitfunktion, insbesondere der Zeitdauer, die Steuervorrichtung 4 ein Signal an die Steuerleitungen 69, 70 aussendet, wodurch die Überbrückungsschaltelemente 67, 68 geschlossen werden und somit die Ladewiderstände 65, 66 kurzgeschlossen sind.

Wird ein Gerät, insbesondere das Schweißgerät 1, in dem die Spannungsumschaltvorrichtung 23 eingebaut ist, aktiviert, d.h. daß dieses Gerät an ein öffentliches Versorgungsnetz, insbesondere an die Energiequelle 24, angeschlossen wird, so kann der Benutzer beispielsweise durch Anordnung eines Einschalters das Schweißgerät 1 mit Energie versorgen. Hierzu wird von der Energiequelle 24 eine Wechselspannung an den Netzgleichrichter 26 geliefert.

Durch die Anordnung der Spannungsumschaltvorrichtung 23 ist es nunmehr möglich, daß der Benutzer ein derartiges Gerät an die unterschiedlichsten Energiequellen 24 mit den unterschiedlichsten Ausgangsspannungen anschließen kann, d.h. daß dieses Gerät, insbesondere das Schweißgerät I, an eine Energiequelle 24 mit einer Spannungshöhe von beispielsweise 220 V - Dreiphasennetz - oder an eine Energiequelle 24 mit einer Spannungshöhe von beispielsweise 400 V - Dreiphasennetz - angeschlossen werden kann. Hierzu muß der Benutzer keine Einstellungen bzw. Anpassungen, wie sie aus dem Stand der Technik bekannt sind, vornehmen, da durch die Spannungsumschaltvorrichtung 23 ein automatisches Anpassen an die unterschiedlichen Eingangsspannungen, insbesondere an 220 V oder 400 V, durchgeführt wird.

Nachdem das Gerät bzw. der Verbraucher 25 beispielsweise durch Betätigen des Einschalters aktiviert wurde, wird die gelieferte Wechselspannung vom Netzgleichrichter 26 in eine Gleichspannung umgewandelt. Der Netzgleichrichter 26 ist derartig dimensioniert, daß sowohl eine Eingangsspannung von beispielsweise 220 V als auch eine Eingangsspannung von beispielsweise 400 V angeschlossen werden kann. Die Ausbildung des Netzgleichrichters 26 kann dabei beliebig erfolgen, d.h. daß sowohl ein Brückengleichrichter als auch einzelne Dioden für die Umwandlung der Wechselspannung in eine Gleichspannung eingesetzt werden können. Vom Netzgleichrichter 26 werden beispielsweise die einzelnen in dem Gerät, insbesondere in dem Schweißgerät 1, angeordneten Bauelemente mit Energie versorgt, d.h. daß sowohl die Steuervorrichtung 4 als auch weitere beliebige Komponenten mit einer entsprechend für sie benötigte Betriebsspannung von beispielsweise 5 - 12 V versorgt werden. Dies kann dabei insofern erfolgen, indem parallel zu dem Netzgleichrichter 26 und/oder parallel zu den Speicherelementen 50, 51, insbesondere dem Zwischenkreiskondensator, ein aus dem Stand der Technik bekanntes Netzgerät zum Versorgen von elektronischen Bauelementen geschaltet ist, wodurch eine Umwandlung der gelieferten Energie in eine Betriebsspannung für die Bauelemente geschaffen werden kann.

Durch den Einsatz der Überbrückungsschaltelemente 67, 68 als Schließer ist es ausgeschlossen, daß durch die Speicherelemente 50, 51 ein Kurzschluß bei Aktivierung der Spannungsumschaltvorrichtung 23 gebildet wird, da die Ladewiderstände 65, 66, wie zuvor beschrieben, in den Stromkreis geschalten sind. Gleichzeitig mit dem Aktivieren der Spannungsumschaltvorrichtung 23 wird von der Netzauswertevorrichtung 32 die Höhe der vom Netzgleichrichter 26 gelieferten Gleichspannung ermittelt, sodaß entsprechend der festgestellten bzw, ermittelten Höhe der Gleichspannung eine Signal über die Steuerleitung 33 an die Steuervorrichtung 4 gesendet wird. Hierbei ist es möglich, daß beispielsweise bei einer Spannungshöhe, die einer Eingangsspannung von 220 V entspricht, kein Signal über die Steuerleitung 33 an die Steuervorrichtung 4 übersendet wird, wodurch diese erkennen kann, daß eine Eingangsspannung in der Höhe von 220 V erfolgt. Wird jedoch eine Energiequelle 24 eingesetzt, bei der die gelieferte Wechselspannung 400 V beträgt, so wird von der Netzauswertevorrichtung 32 ein Signal an die Steuervorrichtung 4 übersandt. Dadurch ist es möglich, daß die Steuervorrichtung 4 die unterschiedlichsten Eingangsspannungen von der Energiequelle 24 erkennen bzw. auswerten kann. Selbstverständlich ist es möglich, daß die Spannungsumschaltvorrichtung 23 auf mehrere unterschiedliche Energiequellen 24, wie beispielsweise einem 110 V Netz, 220 V Netz oder einem 400 V Netz ausgelegt werden kann, wobei die unterschiedlichen Eingangsspannungen bzw. Netze durch unterschiedliche Signale der Steuervorrichtung 4 mitgeteilt werden.

Damit ein zuverlässiger Betrieb der Spannungsumschaltvorrichtung 23 erreicht werden kann, ist die Schaltvorrichtung 59 derartig ausgebildet, daß in der Ruhestellung, also bei nicht Aktivierter Schaltvorrichtung 59, der Schaltzustand für die höhere Eingangsspannung, insbesondere die in vollen Linien dargestellte Stellung, eingestellt ist und somit der Ladezyklus bei Aktivieren der Spannungsumschaltvorrichtung 23 zumindest über eine kurz Zeitdauer über den Schaltzustand für die höhere Eingangsspannung erfolgt, d.h. daß die beiden Speicherelemente 50, 51 durch die Schaltvorrichtung 59 seriell zusammengeschaltet werden.

Aufgrund des gelieferten Signals von der Netzauswertevorrichtung 32 wird von der Steuervorrichtung 4 entsprechend die Schaltvorrichtung 59 angesteuert, d.h. daß die Schaltvorrichtung 59 einen entsprechenden Schaltzustand aufgrund des übersendeten Signals herstellt. Hierzu wird von der Schaltvorrichtung 59 bei einem 220 V Netz der strichliert dargestellte Schaltzustand eingestellt, wogegen bei einem 400 V Netz die Schaltvorrichtung 59 den in vollen Linien gezeichneten Schaltzustand herstellt bzw. beibehält.

Anschließend wird der Funktionsablauf der Spannungsumschaltvorrichtung 23 bei Verwendung einer Energiequelle 24 mit der Spannungshöhe von 220 V beschrieben, d.h. daß in der Schaltvorrichtung 59 der in strichlierten Linien dargestellte Schaltzustand nach dem Ermitteln der Eingangspannung hergestellt bzw. verwendet wird.

Gleichzeitig bzw. nach Aufbau der Betriebsspannung für die einzelnen Bauelemente bzw. Baugruppen wird von der Steuervorrichtung 4 eine voreinstellbare Zeitdauer gestartet. Diese Zeitdauer kann durch ein externes Zeitglied bzw. durch ein Softwareprogramm gebildet werden. Während dieser Zeitdauer erfolgt der Ladezyklus für die Speicherelemente 50, 51 über die Ladewiderstände 65, 66. Durch die Verwendung der Spannungsumschaltvorrichtung 23 bei einer Eingangsspannung von 220 V werden durch die Schaltzustandsänderung in der Schaltvorrichtung 59, also durch den strichliert dargestellten Schaltzustand, die beiden Speicherelemente 50, 51 parallel geladen. Dabei bildet sich zwischen den Netzgleichrichter 26 und den einzelnen Speicherelementen 50 und 51 jeweils ein eigener Stromkreis aus, wobei jeweils in einem Stromkreis zumindest ein Ladewiderstand 65, 66 angeordnet ist. Der Stromkreis für das Speicherelement 50 bildet sich vom Netzgleichrichter 26 über den Ladewiderstand 65, der Drossel 43, der Diode 48 zum Speicherelement 50 und von diesem über die Verbindungsleitung 60, der Schaltvorrichtung 59, der weiteren Verbindungsleitung 63 zum Netzgleichrichter 26 aus. Der weitere Stromkreis für das Speicherelement 51 bildet sich vom Netzgleichrichter 26 über die Verbindungsleitung 62, der Schaltvorrichtung 59, der weiteren Verbindungsleitung 58, der Drossel 44, der Diode 49 zum Speicherelement 51 und von diesem über die negative Leitung 57, der negativen Versorgungsleitung 31, dem Ladewiderstand 66 zum Netzgleichrichter 26 aus.

Selbstverständlich ist es möglich, daß der Ladezyklus für die Speicherelemente 50, 51 über den Schaltzustand für die höhere Eingangsspannung durchgeführt werden kann, wobei erst nach Ablauf der voreingestellten Zeitdauer die Steuervorrichtung 4 die Schaltvorrichtung 59 ansteuert, sodaß eine Anpassung des Schaltzustandes der Schaltvorrichtung 59 an die Eingangsspannung durchgeführt wird. Dadurch wird erreicht, daß die beiden Speicherelemente 50, 51 seriell zueinander geschaltet werden und somit in der Spannungsumschaltvorrichtung 23 nur ein Stromkreis für beide Speicherelemente 50, 51 aufgebaut wird.

Selbstverständlich ist es möglich, daß eine Überwachungsvorrichtung in der Spannungsumschaltvorrichtung 23 angeordnet sein kann, die den Ladezyklus für die Speicherelemente 50, 51 überwacht, sodaß beim Erreichen eines eingestellten Sollwertes ein Signal von dieser Überwachungsvorrichtung an die Steuervorrichtung 4 zum Beenden des Ladezyklus gesendet wird.

Nachdem die Zeitdauer für den Ladezyklus abgelaufen ist, wird von der Steuervorrichtung 4 eine weitere voreinstellbare Sicherheitszeitdauer gestartet. Gleichzeit bzw. während der Sicherheitszeitdauer werden von der Steuervorrichtung 4 die beiden Überbrückungsschaltelemente 67, 68 angesteuert, sodaß die Ladewiderstände 65, 66 kurzgeschlossen werden und somit aus dem Stromkreis des Netzgleichrichters 26 geschaltet sind. Durch die Sicherheitszeitdauer wird sichergestellt, daß vor dem Aktivieren der beiden Hochsetzsteller 34, 35 die Überbrückungsschaltelemente 67, 68 geschlossen sind, sodaß eine Zerstörung der Ladewiderstände 65, 66 durch eine erhöhte Stromaufnahme verhindert wird. Durch die Sicherheitszeitdauer wird in vorteilhafter Weise erreicht, daß die Ladewiderstände 65, 66 gering dimensioniert werden können und somit Kosten eingespart werden. Es ist selbstverständlich möglich, daß durch eine Überdimensionierung der Ladewiderstände 65, 66 diese Sicherheitszeitdauer nicht in das Regelverfahren eingebunden werden muß.

Nach Ablauf der Sicherheitszeitdauer aktiviert die Schaltvorrichtung 59 die beiden in der Spannungsumschaltvorrichtung 23 angeordneten Hochsetzsteller 34, 35. Das Verfahrensprinzip der Hochsetzsteller 34, 35 entspricht einem aus dem Stand der Technik bekannten Verfahren, d.h. daß durch Aktivieren der in den Hochsetzsteller 34, 35 angeordneten Schaltelemente 45, 46 ein Kurzschluß zwischen den positiven und negativen Leitungen 54, 56 und 55, 57 des Hochsetzstellers 34, 35 geschaffen wird. Dadurch bildet sich jeweils ein Stromkreis über die einzelnen Hochsetzsteller 34, 35 mit dem Netzgleichrichter 26 aus. Die unabhängigen Stromkreise der beiden Hochsetzsteller 34, 35 werden deshalb ausgebildet, da diese über die Schaltvorrichtung 59 parallel zum Netzgleichrichter 26 geschalten werden.

Der Stromkreis für den Hochsetzsteller 34 bildet sich über das Überbrückungsschaltelement 67, der Drossel 43, dem Schaltelement 45 zu der negative Leitung 56 und von dieser über die Schaltvorrichtung 59, der Verbindungsleitung 63 an die negative Versorgungsleitung 31 und somit zum Netzgleichrichter 26 aus. Der weitere für den Hochsetzsteller 35 aufgebaute Stromkreis wird ausgehend vom Netzgleichrichter 26 über die Verbindungsleitung 62, der Schaltvorrichtung 59 und von dieser über die Verbindungsleitung 58, der Drossel 44, dem Schaltelement 46 zur negativen Versorgungsleitung 31 und somit zum Netzgleichrichter 26 gebildet. Durch die beiden unabhängigen Stromkreise wird eine Energiespeicherung in den Drosseln 43, 44 hervorgerufen, sodaß nach Deaktivieren der Schaltelemente 45, 46 diese gespeicherte Energie über die Dioden 48, 49 an die Speicherelemente 50, 51 strömen kann. Da die Steuervorrichtung 4 die beiden Hochfrequenzinverter 36, 37 noch nicht aktiviert hat, wird keine Energie an den Transformator 40 geliefert, sodaß ein Vorladen der Speicherelemente 50, 51 durch die in den Drosseln 43, 44 gespeicherte Energie erfolgen kann. Dieser Vorgang mit dem Aktivieren bzw. Kurzschließen der einzelnen Hochsetzsteller 34, 35 über die Schaltelemente 45, 46 wird von der Steuervorrichtung 4 solange fortgeführt, bis eine entsprechende Vorladung der Speicherelemente 50, 51 erreicht ist. Selbstverständlich ist es möglich, daß gleichzeitig mit dem Aktivieren der Hochsetzsteller 34, 35 die beiden Hochfrequenzinverter 36, 37 ebenfalls von der Steuervorrichtung 4 aktiviert werden, wodurch eine sofortige Energieübertragung zum Verbraucher 25 stattfindet.

Da die Hochfrequenzinverter 36, 37 beispielsweise aus einer zum Stand der Technik zählenden Vollbrücke mit entsprechenden Schaltelemente 45, 46 gebildet wird, ist es möglich, daß durch Ansteuern der Hochfrequenzinverter 36, 37 über die Steuerleitung 41 ein Versorgen der Primärwicklungen 38, 39 des Transformators 40 mit Energie von den Hochsetzstellern 34, 35 durchgeführt wird. Durch die Hochfrequenzinverter 36, 37 wird erreicht, daß durch taktweises Ansteuern der einzelnen in den Hochfrequenzinverter 36, 37 angeordneten Schaltelemente 45, 46 eine Wechselspannung an die Primärwicklungen 38, 39 angelegt wird, d.h. daß die von den Hochsetzstellern 34, 35, insbesondere von den Speicherelementen 50, 51, gelieferte Gleichspannung derartig zerhackt wird, daß eine Wechselspannung, insbesondere eine Rechteckspannung, gebildet wird.

Dies ist insofern notwendig, da der Verbraucher 25 über den Transformator 40 mit den Hochfrequenzinvertern 36, 37 galvanisch getrennt zusammengeschlossen ist, sodaß, wie es aus dem Stand der Technik bekannt ist, für die Übertragung von Energie über einen Transformator 40 eine Wechselspannung benötigt wird, da ansonsten bei Anlegen einer Gleichspannung der Transformator 40 eine einmalige Spannungsübertragung durchführt und anschließend in die Sättigung gelangt, worauf keine weitere Spannungsübertragung mehr erfolgt. Durch die Stromflußumkehr bzw. durch das Anlegen einer Wechselspannung, insbesondere der Rechteckspannung, wird erreicht, daß eine ständige Energieübertragung von der Primärseite, also von den Primärwicklungen 38, 39 an die Sekundärwicklung 42 durchgeführt wird und somit eine Versorgung des Verbrauchers 25 mit Energie möglich ist.

Selbstverständlich ist es möglich, wie bei den dargestellten Ausführungsbeispielen gezeigt, daß an der Sekundärwicklung 42 der Verbraucher 25 angeschlossen ist, der wiederum mit einer Gleichspannung versorgt werden muß. Hierzu ist es möglich, daß, wie schematisch dargestellt, eine Mittelpunktschaltung mit der Sekundärwicklung 42 aufgebaut wird, sodaß die übertragene Wechselspannung, insbesondere die Rechteckspannung, wiederum in eine Gleichspannung umgewandelt wird und somit der Verbraucher 25 eine entsprechende gleichgerichtete Energie zur Verfügung hat.

Bei Verwendung der Spannungsumschaltvorrichtung 23 in einem Schweißgerät 1 ist es möglich, daß an die Sekundärwicklung 42 der Schweißbrenner 10 angeschlossen wird, d.h. daß durch die Versorgung des Schweißbrenners 10 mit Energie aus der Spannungsumschaltvorrichtung 23 der Lichtbogen 15 für einen Schweißprozeß aufgebaut werden kann. Weiters ist es möglich, daß jeder beliebige zum Stand der Technik zählende Verbraucher 25 bzw. jede beliebige Gleichrichterschaltung an die Sekundärwicklung 42 angeschlossen werden kann.

Damit eine ständige Energieübertragung über den Transformator 40 erfolgt, ist es notwendig, daß die Steuervorrichtung 4 die Hochsetzsteller 34, 35 und die Hochfrequenzinverter 36, 37, insbesondere deren Schaltelemente 45, 46, über die einzelnen Steuerleitungen 61, 41 ansteuert, wie dies zuvor beschrieben ist.

Bei einer Verwendung einer Energiequelle 24 mit einer Ausgangsspannung von 220 V werden die beiden Hochsetzsteller 34, 35 parallel zueinander betrieben, sodaß für die Primärwicklung 38, als auch für die Primärwicklung 39, ein konstanter synchronisierter Energiefluß erzeugt werden kann. Dies wird insofern erreicht, da die einzelnen Schaltelemente 45, 46 bzw. die Ansteuervorrichtung der Hochsetzsteller 34, 35 über eine gemeinsame Steuerleitung 61 angesteuert werden, wodurch ein synchronisierter Parallellauf der Hochsetzsteller 34, 35 gegeben ist und somit an den Speicherelementen 50, 51 die gleiche Energiemenge zur Verfügung steht.

Bei einer derartigen Anordnung eines Parallelbetriebes der beiden Hochsetzsteller 34, 35 ist es auch möglich, daß die Drosseln 43, 44 über einen gemeinsamen Kern magnetisch gekoppelt werden. Selbstverständlich ist es möglich, daß die einzelnen Drosseln 43, 44 jeweils einen eigenen Kern aufweisen können.

Wird nunmehr das Gerät, insbesondere das Schweißgerät 1, mit der darin angeordneten Spannungsumschaltvorrichtung 23 an eine andere Energiequelle 24, insbesondere an eine Energiequelle 24 mit einer Ausgangsspannung von 400 V, angeschlossen, so sind, wie zuvor beschrieben, bei Aktivierung des Gerätes zuerst wiederum die Ladewiderstände 65, 66 in den Stromkreis des Netzgleichrichters 26 eingebunden. Da jedoch nunmehr eine höhere Ausgangsspannung vom Netzgleichrichter 26 geliefert wird, kann von der Netzauswertevorrichtung 32 ein Signal an die Steuervorrichtung 4 übersandt werden. Die Steuervorrichtung 4 kann nunmehr aufgrund dieses Signals erkennen, daß die Spannungsumschaltvorrichtung 23 an einer Energiequelle 24 mit einer Ausgangsspannung von beispielsweise 400 V angeschlossen ist, sodaß die Steuervorrichtung 4 nunmehr keine Schaltzustandsänderung der Schaltvorrichtung 59 einleitet.

Die Schaltvorrichtung 59 behält den Schaltzustand, insbesondere den in vollen Linien gezeigte Schaltzustand, aufrecht. Dadurch wird erreicht, daß nunmehr die beiden Hochsetzsteller 34, 35 nicht mehr über die Verbindungsleitung 62, 63 mit den positiven und negativen Versorgungsleitungen 30, 31 des Netzgleichrichters 26 zusammengeschaltet werden, sondern daß die beiden Hochsetzsteller 34, 35 über die Verbindungsleitungen 60, 58 unter Zwischenschaltung der Schaltvorrichtung 59 seriell zueinander geschalten werden. Das Seriellschalten der beiden Hochsetzsteller 34, 35 erfolgt derartig, daß die negative Leitung 56 des Hochsetzstellers 34 über die Schaltvorrichtung 59 und die Verbindungsleitung 58 mit der positiven Leitung 55 des Hochsetzstellers 35 gekoppelt wird.

Der Ladezyklus für die Speicherelemente 50, 51 wird beispielsweise bei Aktivierung der Spannungsumschaltvorrichtung 23 mit einer Eingangsspannung von beispielsweise 400 V, wie zuvor beschrieben, durchgeführt, wobei jedoch aufgrund der verwendeten Grundeinstellung, also der Schaltstellung entsprechend den vollen Linien, die Ladung der Speicherelemente 50, 51 durch nur einen Stromkreis erfolgt, da die beiden Speicherelemente 50, 51 seriell zusammengeschaltet sind. Dadurch wird erreicht, daß die gelieferte Gleichspannung auf die beiden Speicherelemente 50, 51 aufgeteilt wird und somit wiederum der selbe Ladezustand wie bei der Parallelladung der Speicherelemente 50, 51 gebildet wird. In dem Ladezyklus für die beiden Speicherelemente 50, 51 sind jedoch die beiden Ladewiderstände 65, 66 angeordnet.

Nachdem der Ladezyklus bzw. die voreingestellte Zeitdauer für den Ladezyklus und die Sicherheitszeitdauer beendet sind, werden von der Steuervorrichtung 4 die beiden Schaltelemente 45, 46 der Hochsetzsteller 34, 35 und/oder die Schaltelemente der Hochfrequenzinverter 36, 37 aktiviert, sodaß wiederum ein Kurzschluß in den einzelnen Hochsetzstellern 34, 35 zwischen ihren positiven und negativen Leitungen 54, 56 und 55, 57 hergestellt wird. Da jedoch nunmehr die beiden Hochsetzsteller 34, 35 seriell zueinander geschaltet sind, wird in der Spannungsumschaltvorrichtung 23 nurmehr ein Stromkreis über die beiden Hochsetzsteller 34, 35 mit dem Netzgleichrichter 26 aufgebaut. Dieser Stromkreis bildet sich vom Netzgleichrichter 26 über das Überbrückungsschaltelement 67, die Drossel 43, dem Schaltelement 45 zur Schaltvorrichtung 59 und von dieser über die Drossel 44, dem Schaltelement 46, der negativen Versorgungsleitung 31, dem Überbrückungsschaltelement 68 zum Netzgleichrichter 26 aus.

Dadurch wird erreicht, daß aufgrund der höheren gelieferten Ausgangsspannung vom Netzgleichrichter 26 diese Ausgangsspannung bzw. die gelieferte Energiemenge sich in die beiden Drosseln 43, 44 aufteilt. Durch Deaktivieren der beiden Schaltelemente 45, 46 wird wiederum die aufgeteilte, gespeicherte Energie von den Drosseln 43, 44 über die Dioden 48, 49 an die Speicherelemente 50, 51 geliefert. Aufgrund der Halbierung bzw. Aufteilung der vom Netzgleichrichter 26 gelieferten Energie wird erreicht, daß an den Speicherelementen 50, 51 wiederum die gleich Energiemenge, bzw. Spannungshöhe wie bei Verwendung einer Energiequelle 24 mit einer Ausgangsspannung von 220 V, hergestellt wird. Die Steuerung bei Verwendung einer Energiequelle 24 von 400 V erfolgt wie zuvor für den Funktionsablauf mit einer Energiequelle 24 von 220 V, d.h. daß die seriell zueinander geschalteten Hochsetzsteller 34, 35 und die Hochfrequenzinverter 36, 37, insbesondere deren Schaltelemente 45, 46, von der Steuervorrichtung 4 über die Steuerleitung 41, 61 angesteuert werden, wobei jedoch die Ladewiderstände 65, 66 nach Ablauf der voreinstellbaren Zeitdauer aus dem Versorgungskreis des Netzgleichrichters 26 geschaltet werden.

Der wesentliche Vorteil einer derartigen Spannungsumschaltvorrichtung 23 liegt nun darin, daß durch das Seriellschalten der beiden Hochsetzsteller 34, 35 die erhöht gelieferte Energie vom Netzgleichrichter 26 halbiert wird und somit an den Speicherelementen 50, 51 wiederum die selbe Energiemenge bzw. Spannungshöhe zur Verfügung steht, wie sie bei Verwendung einer derartigen Spannungsumschaltvorrichtung 23 für ein Spannungsnetz mit geringer Ausgangsspannung von 220 V hergestellt wird. Dadurch wird erreicht, daß die an die Speicherelemente 50, 51 nachfolgend angeordneten Bauelemente, wie beispielsweise die Hochfrequenzinverter 36, 37, den Transformator 40 und die auf der Sekundärseite des Transformators 40 angeordneten Bauelemente, insbesondere der Verbraucher 25, nur für ein Spannungsnetz von beispielsweise 220 V dimensioniert werden muß und somit eine Überdimensionierung der Bauelemente, welche mit erheblichen Kosten verbunden sind, verhindert werden kann.

Durch eine derartige Spannungsumschaltvorrichtung 23 wird erreicht, daß kein kapazitiver Spannungsmittelpunkt geschaffen wird, da die Speicherelemente 50, 51, insbesondere die Kondensatoren 52, 53, in jedem Fall über die Regelung der Hochsetzsteller 34, 35 symmetriert werden. Bei bekannten aus dem Stand der Technik eingesetzten Spannungsumschaltvorrichtungen 23 werden die darin angeordneten Speicherelemente, insbesondere die Zwischenkreiskondensatoren, für die unterschiedlichsten Eingangsspannungen der Energiequellen 24 direkt parallel oder seriell zueinander geschaltet, sodaß der danach geschaltete Hochfrequenzinverter 36, 37 an einem kapazitiven Spannungsmittelpunkt angeschlossen ist. Dieser kapazitive Spannungsmittelpunkt wird mit der erfindungsgemäßen Lösung unterbunden.

Damit bei der erfindungsgemäßen Spannungsumschaltvorrichtung 23 ein symmetrischer Betrieb der Speicherelemente 50, 51, insbesondere der sogenannte Zwischenkreiskondensatoren, gewährleistet ist, ist die Regelung der beiden Hochfrequenzinverter 36, 37 von besonderer Bedeutung. Hierzu ist es möglich, daß die beiden Hochfrequenzinverter 36, 37 unabhängig voneinander von der Steuervorrichtung 4 angesteuert bzw. geregelt werden können, sodaß eine Leistungsverschiebung bzw. eine unsymmetrische Energieentnahme verhindert werden kann.

Weiters hat die Bauweise des Transformators 40 einen Einfluß auf die Symmetrierung der Speicherelemente 50, 51. Es können beispielsweise auch zwei magnetisch unabhängige Transformatoren 40, welche sekundärseitig parallel verschaltet sind, oder, so wie dargestellt, ein Transformator 40 mit zwei gekoppelten Primärwicklungen 38, 39 verwendet werden. Die beiden Drosseln 43, 44 der Hochsetzsteller 34, 35 können entweder getrennt oder über einen gemeinsamen Kern magnetisch gekoppelt werden. Selbstverständlich ist es möglich, daß die Schaltvorrichtung 59 durch aus dem Stand der Technik bekannte Steckkontaktsysteme gebildet werden kann, wodurch der Benutzer eines derartigen Gerätes, insbesondere des Schweißgerätes 1, vor der Inbetriebnahme einen entsprechenden Schaltzustand händisch herstellen muß. Es ist auch möglich, daß eine derartige Spannungsumschaltvorrichtung 23 auch für Einphasennetze eingesetzt werden kann.

Weiters ist in der erfindungsgemäßen Spannungsumschaltvorrichtung 23 eine Symmetriehilfe 71 für die Versorgung der beiden Primärwicklungen 38, 39 angeordnet. Die Symmetriehilfe 71 wird einerseits durch ein RC-Glied 72 und andererseits durch einen Symmetrietransformator 73 gebildet. Die Anordnung der Symmetriehilfen 71 ist insofern von Bedeutung, da dadurch ein passiver Ladungsausgleich zwischen den beiden Primärwicklungen 38, 39 erzielt wird, d.h. daß bei unterschiedlicher Versorgung der beiden Primärwicklungen 38, 39 ein Ladungsausgleich, insbesondere der Hälfte des Spannungsunterschiedes, erwirkt wird, sodaß der Transformator 40, insbesondere die beiden Primärwicklungen 38, 39, immer symmetrisch mit Energie versorgt werden.

Der Einsatz des RC-Gliedes 72 dient dazu, daß bei Leerlauf der Spannungsumschaltvorrichtung, insbesondere bei nicht aktiviertem Verbraucher 25, die geringen Spannungsunterschiede durch die Ladung der Kondensatoren der RC-Glieder 72 kompensiert wird. Hierzu ist zwischen jeweils einer Leitung der einen Primärwicklung 38 und jeweils einer Leitung der weiteren Primärwicklung 39 ein eigenes RC-Glied 72 angeordnet. Dabei ist jedoch auf den Wicklungssinn der einzelnen Primärwicklungen 38, 39 zu achten, sodaß beispielsweise jene Leitung die mit der Primärwicklung 38 mit dem Wicklungsanfang, welcher durch einen Punkt dargestellt ist, mit der Leitung der weiteren Primärwicklung 39 mit dem Wicklungsanfang über das RC-Glied 72 verbunden ist. Die weiteren Leitungen der beiden Primärwicklungen 38, 39 sind wiederum über ein derartiges RC-Glied 72 miteinander verbunden.

Der Einsatz der weiteren Symmetriehilfe 71, nämlich des Symmetrietransformators 73, dient dazu, daß bei höherer Stromübertragung bzw. Energieübertragung über den Transformator 40 wiederum ein Energieausgleich durchgeführt wird, wobei zum Energieausgleich über den Symmetrietransformator 73 dieser von den RC-Gliedern geringfügig unterstützt wird. Damit ein Energieausgleich vom Symmetrietransformator 73 durchgeführt werden kann, weist dieser für jede Primärwicklung 38, 39 jeweils eine Symmetriewicklung 74, 75 auf, die über einen gemeinsamen Kern 76 magnetisch gekoppelt ist. Jeweils eine Symmetriewicklung 74, 75 des Symmetrietransformators 73 wird in Serie zu jeweils einer der beiden Primärwicklungen 38, 39 geschaltet, wobei wiederum auf den Wicklungssinn der einzelnen Wicklungen, insbesondere der Primärwicklungen 38, 39 und der Symmetriewicklungen 74, 75, Rücksicht genommen werden muß. Weisen die Symmetriewicklungen 74, 75 des Symmetrietransformators 73 den gleichen Wicklungssinn auf, so muß beispielsweise eine Symmetriewicklung 74 am Wicklungsende der Primärwicklung 38 und die weitere Symmetriewicklung 75 am Wicklungsanfang der Primärwicklung 39 oder umgekehrt angeordnet werden. Bei unterschiedlichen Wicklungssinn der beiden Symmetriewicklungen 74, 75 ist es möglich, daß die beiden Symmetriewicklungen 74, 75 jeweils am Wicklungsanfang oder am Wicklungsende der Primärwicklungen 38, 39 angeschlossen werden.

Durch die Anordnung des Symmetrietransformators 73 wird wiederum erreicht, daß ein Energieaustausch zwischen den beiden Primärwicklungen 38, 39 durchgeführt wird, wobei jedoch nunmehr ein Energieaustausch mit höherer Leistung durchgeführt werden kann. Bei dem Energieaustausch wird die Hälfte der überschüssigen Energie an einer der beiden Primärwicklungen 38, 39 an die weitere Primärwicklung 38, 39 übertragen, wodurch sichergestellt ist, daß ein symmetrischer Betrieb des Transformators 40 für die unterschiedlichsten Leistungen ermöglicht wird. Diese Symmetriehilfe 71 wird jedoch nur bei größeren Leistungsübertragungen aktiv, d.h., daß bei Versorgung des Verbrauchers 25, also nicht im Leerlauf, der Energieausgleich durch den Symmetrietransformator 73 erfolgt.

Ein wesentlicher Vorteil der Anordnung der Symmetriehilfen 71 liegt darin, daß durch die Symmetriehilfen 71 die unsymmetrische Versorgung der Primärwicklungen 38, 39, welche durch Bauteiltoleranzen auftreten können, verhindert wird. Durch die Anordnung der Symmetriehilfen 71 und der Hochsetzsteller 34, 35 wird auch erreicht, daß Netzschwankungen von der Energiequelle 24 keinen Einfluß auf die Symmetrie des Transformators 40 haben. Ein weiterer Vorteil der erfindungsgemäßen Spannungsumschaltvorrichtung 23 liegt darin, daß eine Verbesserung des Leistungsfaktors sowie eine Netzstromaufnahme reduziert wird und gleichzeitig die Netzverzerrungen bzw. Oberwellen verringert werden.

Selbstverständlich ist es möglich, daß bei einer derartigen Spannungsumschaltvorrichtung 23 der passive Ladungsausgleich über die Symmetriehilfen 71, insbesondere der RC-Glieder 72 und des Symmetrietransformators 75, entfallen kann. Damit jedoch ein symmetrischer Betrieb des Transformators 40 sichergestellt ist, ist es notwendig, daß ein aktiver Ladungsausgleich durchgeführt wird. Dieser kann derartig erfolgen, indem die einzelnen Schaltelemente 45, 46 der Hochsetzsteller 34, 35 und der Hochfrequenzinverter 36, 37 unabhängig von der Steuervorrichtung 4 angesteuert werden, sodaß über ein entsprechendes Regelverfahren ein aktiver Ladungsausgleich durchgeführt werden kann.

Abschließend sei der Ordnung halber darauf hingewiesen, daß in den Zeichnungen einzelne Bauteile und Baugruppen zum besseren Verständnis der Erfindung unproportional und maßstäblich verzerrt dargestellt sind.

Es können auch einzelne Merkmale der einzelnen Ausführungsbeispiele mit anderen Einzelmerkmalen von anderen Ausführungsbeispielen kombiniert oder jeweils für sich allein den Gegenstand von eigenständigen Erfindungen bilden.

Vor allem können die einzelnen in den Fig. 1; 2 gezeigten Ausführungen den Gegenstand von eigenständigen erfindungsgemäßen Lösungen bilden. Die diesbezüglichen erfindungsgemäßen Aufgaben und Lösungen sind den Detailbeschreibungen dieser Figuren zu entnehmen.

### Bezugszeichenaufstellung

- 1: Schweißgerät
- 2: Stromquelle
- 3: Leistungsteil
- 4: Steuervorrichtung
- 5: Umschaltglied

- 6: Steuerventil
- 7: Versorgungsleitung
- 8: Gas
- 9: Gasspeicher
- 10: Schweißbrenner

- 11: Drahtvorschubgerät
- 12: Versorgungsleitung
- 13: Schweißdraht
- 14: Vorratstrommel
- 15: Lichtbogen

- 16: Werkstück
- 17: Versorgungsleitung
- 18: Versorgungsleitung
- 19: Kühlkreislauf
- 20: Strömungswächter

- 21: Wasserbehälter
- 22: Ein- und/oder Ausgabevorrichtung
- 23: Spannungsumschaltvorrichtung
- 24: Energiequelle
- 25: Verbraucher

- 26: Netzgleichrichter
- 27: Netzanschlußleitung
- 28: Netzanschlußleitung
- 29: Netzanschlußleitung
- 30: positive Versorgungsleitung

- 31: negative Versorgungsleitung
- 32: Netzauswertevorrichtung
- 33: Steuerleitung
- 34: Hochsetzsteller
- 35: Hochsetzsteller

- 36: Hochfrequenzinverter
- 37: Hochfrequenzinverter
- 38: Primärwicklung
- 39: Primärwicklung
- 40: Transformator

- 41: Steuerleitung
- 42: Sekundärwicklung
- 43: Drossel
- 44: Drossel
- 45: Schaltelement

- 46: Schaltelement
- 47: Transistor
- 48: Diode
- 49: Diode
- 50: Speicherelement

- 51: Speicherelement
- 52: Kondensator
- 53: Kondensator
- 54: positive Leitung
- 55: positive Leitung

- 56: negative Leitung
- 57: negative Leitung
- 58: Verbindungsleitung
- 59: Schaltvorrichtung
- 60: Verbindungsleitung

- 61: Steuerleitung
- 62: Verbindungsleitung
- 63: Verbindungsleitung
- 64: Steuerleitung
- 65: Ladewiderstand

- 66: Ladewiderstand
- 67: Überbrückungsschaltelement
- 68: Überbrückungsschaltelement
- 69: Steuerleitung
- 70: Steuerleitung

- 71: Symmetriehilfe
- 72: RC-Glied
- 73: Symmetrietransformator
- 74: Symmetriewicklung
- 75: Symmetriewicklung

- 76: Kern

## Patentansprüche

1. Spannungsumschaltvorrichtung bestehend aus einem Netzgleichrichter, zwei Hochsetzstellern mit zumindest je einem Speicherelement (50, 51), einem oder mehreren Transformatoren (40), einer Schaltvorrichtung (59), mittels welcher eine Umschaltung zwischen Energiequellen unterschiedlicher Spannung erfolgt, einer Steuervorrichtung (4) und mehreren Netzanschlußteitungen, wobei die Netzgleichrichter über die Netzanschlußleitungen (27-29) mit einer Energiequelle (24) und ein Verbraucher (25) mit einer Sekundärwicklung (42) des Transformators verbunden sind, wobei zur Auswertung der Höhe einer von der Energiequelle gelieferten Spannung eine Netzauswertevorrichtung (32), deren Ausgang mit der Schaltvorrichtung (59) oder mit der Steuervorrichtung (4) verbunden ist, angeordnet ist, **dadurch gekennzeichnet, daß** in einer positiven und negativen Versorgungsleitung (30, 31) vom Netzgleichrichter (26) jeweils ein Hochsetzsteller (34,35) angeordnet ist, wobei die Hochsetzsteller (34, 35) mit der Schaltvorrichtung (59) verbunden sind und die in dem Hochsetzsteller (34, 35) angeordneten Speicherelemente (50, 51) unabhängig voneinander mit jeweils einem Hochfrequenzinverter (36, 37) verbunden sind,
wobei die Hochfrequenzinverter (36, 37) jeweils mit einer Primärwicklung (38, 39) eines oder mehrerer Transformatoren (40) verbunden sind.

2. Spannungsumschaltvorrichtung nach Anspruch 1, **dadurch gekennzeichnet, daß** in den positiven und negativen Versorgungsleitungen (30, 31) vom Netzgleichrichter (26) zu den Hochsetzstellern (34, 35) jeweils ein Ladewiderstand (65, 66) angeordnet ist.

3. Spannungsumschaltvorrichtung nach Anspruch 2, **dadurch gekennzeichnet, daß** parallel zu den Ladewiderständen (65, 66) ein Überbrückungsschaltelement (67, 68) angeordnet ist.

4. Spannungsumschaltvorrichtung nach Anspruch 1, **dadurch gekennzeichnet, daß** die Hochfrequenzinverter (36, 37) aus einer Vollbrücke mit mehreren Schaltelementen, insbesondere mit Transistoren (47), gebildet sind.

5. Spannungsumschaltvorrichtung nach Anspruch 4, **dadurch gekennzeichnet, daß** die Eingänge der Schaltelemente (45, 46) mit der Steuervorrichtung (4) verbunden sind.

6. Spannungsumschaltvorrichtung nach Anspruch 1, **dadurch gekennzeichnet, daß** jeder Hochsetzsteller (34, 35) aus einer Drossel (43, 44), einem Schaltelement (45, 46), einer Diode (48, 49) und einem Speicherelement (50, 51) gebildet ist.

7. Spannungsumschaltvorrichtung nach den Ansprüchen 1 und 6, **dadurch gekennzeichnet, daß** die Hochsetzsteller (34, 35) eine positive und eine negative Leitung (54 bis 57) aufweisen, wobei in der positiven Leitung (54, 55) die Drossel (43, 44) und die Diode (48, 49) seriell angeordnet sind und daß zwischen der Drossel (43, 44) und der Diode (48, 49) das Schaltelement (45, 46) mit den beiden Leitungen (54 bis 57) verbunden ist, wobei zu dem Schaltelement (45, 46) parallel unter Zwischenschaltung der Diode (48, 49) das Speicherelement (50, 51) mit den beiden positiven/negativen Leitungen (54 bis 57) verbunden ist.

8. Spannungsumschaltvorrichtung nach den Ansprüchen 1 und 7, **dadurch gekennzeichnet, daß** die Drossel (43) des Hochsetzstellers (34), insbesondere die positive Leitung (54) des Hochsetzstellers (34), mit der positiven Versorgungsleitung (30) verbunden ist.

9. Spannungsumschaltvorrichtung nach den Ansprüchen 1 und 7, **dadurch gekennzeichnet, daß** die Drossel (44) des Hochsetzstellers (35), insbesondere die positive Leitung (55) des Hochsetzstellers (35), über eine Verbindungsleitung (58) mit der Schaltvorrichtung (59) verbunden ist.

10. Spannungsumschaltvorrichtung nach den Ansprüchen 1 und 4, **dadurch gekennzeichnet, daß** die Schaltelemente (45, 46) der Hochsetzsteller (34, 35) über eine Leitung miteinander verbunden sind und diese über eine Steuerleitung (61) mit der Steuervorrichtung (4) verbunden ist oder daß die Schaltelemente (34, 35) über jeweils eine eigene Steuerleitung (61) mit der Steuervorrichtung (4) verbunden sind.

11. Spannungsumschaltvorrichtung nach Anspruch 1, **dadurch gekennzeichnet, daß** die Schaltvorrichtung (59) parallel zum Netzgleichrichter (26) angeordnet ist, wobei sowohl die positive als auch die negative Versorgungsleitung (30, 31) über jeweils eine Verbindungsleitung (62, 63) mit der Schaltvorrichtung (59) verbunden ist.

12. Spannungsumschaltvorrichtung nach Anspruch 1, **dadurch gekennzeichnet, daß** die Schaltvorrichtung (59) mit je einer Verbindungsleitung (60, 58) mit den Hochsetzstellern (34, 35) verbunden ist.

13. Spannungsumschaltvorrichtung nach den Ansprüchen 1 und 11, **dadurch gekennzeichnet, daß** bei einer niedrigen Eingangsspannung, insbesondere bei 230 V, die Schaltvorrichtung (59) den Hochsetzsteller (35), der mit der negativen Versorgungsleitung (31) verbunden ist, über die Verbindungsleitung (58) mit der positiven Versorgungsleitung (30) zusammenschaltet.

14. Spannungsumschaltvorrichtung nach den Ansprüchen 1 und 11, **dadurch gekennzeichnet, daß** bei einer niedrigen Eingangsspannung, insbesondere bei 230 V, die Schaltvorrichtung (59) den Hochsetzsteller (34), der mit der positiven Versorgungsleitung (30) verbunden ist, über die Verbindungsleitung (60) mit der negativen Versorgungsleitung (31) zusammenschaltet.

15. Spannungsumschaltvorrichtung nach den Ansprüchen 1 und 11, **dadurch gekennzeichnet, daß** bei einer hohen Eingangsspannung, insbesondere bei 400 V, die Schaltvorrichtung (59) den Hochsetzsteller (34) in der positiven Versorgungsleitung (30) mit dem Hochsetzsteller (35) in der negativen Versorgungsleitung (31) zusammenschaltet, wobei die beiden mit den positiven und negativen Versorgungsleitung (30, 31) verbundenen Verbindungsleitungen (58, 60) von der Schaltvorrichtung (59) deaktiviert bleiben.

16. Spannungsumschaltvorrichtung nach Anspruch 1, **dadurch gekennzeichnet, daß** in der Spannungsumschaltvorrichtung (23), insbesondere zwischen den Hochfrequenzinvertern (36, 37) und den Primärwicklungen (38, 39) des Transformators (40), eine Symmetriehilfe (71) angeordnet ist.

17. Spannungsumschaltvorrichtung nach Anspruch 16, **dadurch gekennzeichnet, daß** die Symmetriehilfe (71) durch ein RC-Glied (72) und einen Symmetrietransformator (73) gebildet ist.

18. Spannungsumschaltvorrichtung nach Anspruch 17, **dadurch gekennzeichnet, daß** jeweils ein RC-Glied (72) zwischen jeweils einer Leitung der einen Primärwicklung (38) und jeweils einer Leitung der weiteren Primärwicklung (39) angeordnet ist.

19. Spannungsumschaltvorrichtung nach Anspruch 17,, **dadurch gekennzeichnet, daß** der Symmetrietransformator (73) durch zumindest zwei Symmetriewicklungen (74, 75) gebildet ist, die über einen gemeinsamen Kern (76) magnetisch gekoppelt sind.

20. Spannungsumschaltvorrichtung nach den Ansprüchen 18 und 19, **dadurch gekennzeichnet, daß** jeweils eine Symmetriewicklung (74, 75) in Serie zu jeweils einer Primärwicklung (38, 39) geschaltet ist.

## Claims

1. Voltage switch-over device consisting of a mains rectifier, two boost choppers, each with at least one accumulator element (50, 51), one or more transformers (40), a switching device (59) by means of which a switch-over is made between power sources of differing voltage, a control device (4) and several power cables, the power cables (27 - 29) connecting the rectifier to a power source (24) and a consumer (25) to a secondary winding (42) of the transformer, and a mains evaluating device (32) is provided in order to evaluate the level of a voltage supplied from a power source, the output of which is connected to the switching device (59) or to the control device (4), **characterised in that** a positive and a negative supply line (30, 31) from the mains rectifier (26) are each provided with a boost chopper (34, 35), the boost choppers (34, 35) are connected to the switching device (59) and the accumulator elements (50, 51) provided in the boost choppers (34, 35) are each connected independently of one another to a high-frequency inverter (36, 37), the high-frequency inverters (36, 37) each being connected to a primary winding (38, 39) of one or more transformers (40).

2. Voltage switch-over device as claimed in claim 1, **characterised in that** a charging resistor (65, 66) is provided respectively in the positive and negative supply lines (30, 31) from the mains rectifier (26) to the boost choppers (34, 35).

3. Voltage switch-over device as claimed in claim 2, **characterised in that** a bypass switching element (67, 68) is provided in parallel with the charging resistors (65, 66).

4. Voltage switch-over device as claimed in claim 1, **characterised in that** the high-frequency inverters (36, 37) are provided in the form of a full bridge with several switching elements, in particular transistors (47).

5. Voltage switch-over device as claimed in claim 4, **characterised in that** the inputs of the switching elements (45, 46) are connected to the control device (4).

6. Voltage switch-over device as claimed in claim 1, **characterised in that** each boost chopper (34, 35) is made up of a choke (43, 44), a switching element (45, 46), a diode (48, 49) and an accumulator element (50, 51).

7. Voltage switch-over device as claimed in claims 1 and 6, **characterised in that** the boost choppers (34, 35) have a positive and a negative line (54 to 57) and the choke (43, 44) and diode (48, 49) are connected in series in the positive line (54, 55) whilst the switching element (45, 46) is connected to the two lines (54 to 57) between the choke (43, 44) and the diode (48, 49), the accumulator element (50, 51) being connected to the two positive/negative lines (54 to 57) in parallel with the switching element (45, 46), with the diode (48, 49) connected in between.

8. Voltage switch-over device as claimed in claims 1 and 7, **characterised in that** the choke (43) of the boost chopper (34), in particular the positive line (54) of the boost chopper (34), is connected to the positive supply line (30).

9. Voltage switch-over device as claimed in claims 1 and 7, **characterised in that** the choke (44) of the boost chopper (35), in particular the positive line (55) of the boost chopper (35), is connected to the switching device (59) via a connecting line (58).

10. Voltage switch-over device as claimed in claims 1 and 4, **characterised in that** the switching elements (45, 46) of the boost choppers (34, 35) are connected to one another via a line and it is connected via a control line (61) to the control device (4) or alternatively the switching elements (34, 35) are each connected to the control device (4) via a separate control line (61).

11. Voltage switch-over device as claimed in claim 1, **characterised in that** the switching device (59) is disposed in parallel with the mains rectifier (26) and both the positive and the negative supply line (30, 31) is connected to the switching device (59) via a respective connecting line (62, 63).

12. Voltage switch-over device as claimed in claim 1, **characterised in that** the switching device (59) is connected by a connecting line (60, 58) to each of the boost choppers (34, 35).

13. Voltage switch-over device as claimed in claims 1 and 11, **characterised in that** when the input voltage is low, in particular 230 V, the switching device (59) connects the boost chopper (35) that is connected to the negative supply line (31) with the positive supply line (30) via the connecting line (58).

14. Voltage switch-over device as claimed in claims 1 and 11, **characterised in that** when the input voltage is low, in particular 230 V, the switching device (59) connects the boost chopper (34) that is connected to the positive supply line (30) with the negative supply line (31) via the connecting line (60).

15. Voltage switch-over device as claimed in claims 1 and 11, **characterised in that** when the input voltage is high, in particular 400 V, the switching device (59) connects the boost chopper (34) in the positive supply line (30) to the boost chopper (35) in the negative supply line (31) and the two connecting lines (58, 60) connected to the positive and negative supply line (30, 31) remain deactivated by the switching device (59).

16. Voltage switch-over device as claimed in claim 1, **characterised in that** a balancing aid (71) is provided in the voltage switch-over device (23), in particular between the high-frequency inverters (36, 37) and the primary windings (38, 39) of the transformer (40).

17. Voltage switch-over device as claimed in claim 16, **characterised in that** the balancing aid (71) is provided in the form of a RC element (72) and a balanced transformer (73).

18. Voltage switch-over device as claimed in claim 17, **characterised in that** a RC element (72) is provided respectively between each line of the one primary winding (38) and each line of the other primary winding (39).

19. Voltage switch-over device as claimed in claim 17, **characterised in that** the balanced transformer (73) is provided in the form of at least two balanced windings (74, 75), which are magnetically coupled via a common core (76).

20. Voltage switch-over device as claimed in claims 18 and 19, **characterised in that** a balanced winding (74, 75) is respectively connected in series to each primary winding (38, 39).

## Revendications

1. Dispositif commutateur de tension constitué d'un redresseur de réseau, de deux convertisseurs élévateurs avec au moins respectivement un élément de stockage (50, 51), d'un ou de plusieurs transformateurs (40), d'un dispositif de commutation (59) au moyen duquel a lieu une commutation entre des sources d'énergie de tensions différentes, d'un dispositif de commande (4) et de plusieurs lignes de raccordement secteur, où les redresseurs de réseau sont reliés par les lignes de raccordement secteur (27 - 29) à une source d'énergie (24) et un consommateur (25) à un enroulement secondaire (42) du transformateur, où pour évaluer la hauteur d'une tension fournie par la source d'énergie, il est disposé un dispositif d'évaluation de réseau (32) dont la sortie est reliée au dispositif de commutation(59) ou au dispositif de commande (4), **caractérisé en ce qu'**il est disposé dans une ligne d'alimentation positive et négative (30, 31) du redresseur de réseau (26) respectivement un convertisseur élévateur (34, 35), où les convertisseurs élévateurs (34, 35) sont reliés au dispositif de commutation (59), et les éléments de stockage (50, 51) disposés dans le convertisseur élévateur (34, 35) sont reliés indépendamment l'un de l'autre à respectivement un inverseur haute fréquence (36, 37), où les inverseurs haute fréquence (36, 37) sont reliés chacun à un enroulement primaire (38, 39) d'un ou de plusieurs transformateurs (40).

2. Dispositif commutateur de tension selon la revendication 1, **caractérisé en ce qu'**il est disposé dans les lignes d'alimentation positive et négative (30, 31) du redresseur de réseau (26) aux convertisseurs élévateurs (34, 35) respectivement une résistance de charge (65, 66).

3. Dispositif commutateur de tension selon la revendication 2, **caractérisé en ce qu'**un élément de montage de liaison en shunt (67, 68) est disposé parallèlement aux résistances de charge (65, 66).

4. Dispositif commutateur de tension selon la revendication 1, **caractérisé en ce que** les inverseurs haute fréquence (36, 37) sont formés par un pont plein avec plusieurs éléments de montage, notamment avec des transistors (47).

5. Dispositif commutateur de tension selon la revendication 4, **caractérisé en ce que** les entrées des éléments de commutation (45, 46) sont reliées au dispositif de commande (4).

6. Dispositif commutateur de tension selon la revendication 1, **caractérisé en ce que** chaque convertisseur élévateur (34, 35) est formé par une bobine de self (43, 44), un élément de commutation (45, 46), une diode (48, 49) et un élément de stockage (50, 51).

7. Dispositif commutateur de tension selon les revendications 1 et 6, **caractérisé en ce que** les convertisseurs élévateurs (34, 35) présentent une ligne positive et une ligne négative (54 à 57), où sont disposées en série dans la ligne positive (54, 55) la bobine de self (43, 44) et la diode (48, 49) et **en ce que**, entre la bobine de self (43,44) et la diode (48, 49), l'élément de commutation (45, 46) est relié aux deux lignes (54 à 57) où est relié à l'élément de commutation (45, 46), parallèlement en intercalant la diode (48, 49), l'élément de stockage (50, 51) avec les deux lignes positive/négative (54 à 57).

8. Dispositif commutateur de tension selon les revendications 1 à 7, **caractérisé en ce que** la bobine de self (43) du convertisseur élévateur (34), notamment la ligne positive (54) du convertisseur élévateur (34), est reliée à la ligne d'alimentation positive (30).

9. Dispositif commutateur de tension selon les revendications 1 et 7, **caractérisé en ce que** la bobine de self (44) du convertisseur élévateur (35), notamment la ligne positive (55) du convertisseur élévateur (35) est reliée par une ligne de liaison (58) au dispositif commutateur (59).

10. Dispositif commutateur de tension selon les revendications 1 et 4, **caractérisé en ce que** les éléments de commutation (45, 46) des convertisseurs élévateurs (34, 35) sont reliés par une ligne entre eux et que celle-ci est reliée par une ligne de commande (61) au dispositif de commande (4), ou bien que les éléments de commutation (34, 35) sont reliés par respectivement une ligne de commande propre (61) au dispositif de commande (4).

11. Dispositif commutateur de tension selon la revendication 1, **caractérisé en ce que** le dispositif commutateur (59) est disposé parallèlement au redresseur de réseau (26), où à la fois les lignes d'alimentation positive et aussi négative (30, 31) sont reliées par respectivement une ligne de liaison (62, 63) au dispositif commutateur (59).

12. Dispositif commutateur de tension selon la revendication 1, **caractérisé en ce que** le dispositif de commutation (59) est relié par respectivement une ligne de liaison (60, 58) aux convertisseurs élévateurs (34, 35).

13. Dispositif commutateur de tension selon les revendications 1 et 11, **caractérisé en ce que** lors d'une tension d'entrée basse, notamment à 230 V, le dispositif commutateur (59) commute le convertisseur élévateur (35) qui est relié à la ligne d'alimentation négative (31), par la ligne de liaison (58) à la ligne d'alimentation positive (30).

14. Dispositif commutateur de tension selon les revendications 1 et 11, **caractérisé en ce que** lors d'une tension d'entrée basse, notamment à 230 V, le dispositif commutateur (59) commute le convertisseur élévateur (34) qui est relié à la ligne d'alimentation positive (30), par la ligne de liaison (60) à la ligne d'alimentation négative (31).

15. Dispositif commutateur de tension selon les revendications 1 et 11, **caractérisé en ce que** lors d'une tension d'entrée élevée, notamment à 400 V, le dispositif commutateur (59) commute le convertisseur élévateur (34) dans la ligne d'alimentation positive (30), avec le convertisseur élévateur (35) dans la ligne d'alimentation négative (31), où les deux lignes de liaison (58, 60) reliées aux lignes de liaison positive et négative (30, 31) restent désactivées par le dispositif commutateur (59).

16. Dispositif commutateur de tension selon la revendication 1, **caractérisé en ce qu'**il est disposé dans le dispositif commutateur de tension (23), notamment entre les inverseurs haute fréquence (36, 37) et les enroulements primaires (38, 39) du transformateur (40) une aide à la symétrie (71).

17. Dispositif commutateur de tension selon la revendication 16, **caractérisé en ce que** l'aide à la symétrie (71) est formée par une combinaison RC (72) et un transformateur de symétrie (73).

18. Dispositif commutateur de tension selon la revendication 17, **caractérisé en ce qu'**il est disposé respectivement une combinaison RC (72) entre respectivement une ligne d'un enroulement primaire (38) et respectivement une ligne de l'autre enroulement primaire (39).

19. Dispositif commutateur de tension selon la revendication 17, **caractérisé en ce que** le transformateur de symétrie (73) est formé par au moins deux enroulements de symétrie (74, 75) qui sont couplés magnétiquement par un noyau commun (76).

20. Dispositif commutateur de tension selon les revendications 18 et 19, **caractérisé en ce que** respectivement un enroulement de symétrie (74, 75) est monté en série avec respectivement un enroulement primaire (38, 39). 1.
